# EUROPÄISCHE PATENTANMELDUNG

(11) **EP 3 739 816 A1**
(43) Veröffentlichungstag der Anmeldung: **18.11.2020**
(21) Anmeldenummer: 19175155.1
(22) Anmeldetag: 17.05.2019
(51) Int. Cl.: H04L 12/28, G06F 3/01, G07C 9/00

(54) **TÜRKOMMUNIKATIONSANLAGE MIT EINER WOHNUNGS- ODER TÜRSTATION**

(71) Anmelder: GIRA GIERSIEPEN GmbH & Co. KG, 42477 Radevormwald (DE)
(72) Erfinder: Schimmelpfennig, Frank, 42477 Radevormwald (DE)
(74) Vertreter: Angerhausen, Christoph

(57) **Zusammenfassung**

Die Erfindung betrifft eine Türkommunikationsanlage (1) mit einer Wohnungs- oder Türstation (2), die mindestens ein berührungssensitives Display (3) mit einem darauf angezeigten ersten Eingabefeld (4) für die manuelle Auslösung einer Funktion der Türkommunikationsanlage (1) aufweist, dadurch gekennzeichnet, dass die Wohnungs- oder Türstation (2) mindestens ein zweites Eingabefeld (5) aufweist und dazu eingerichtet ist, die Funktion erst dann auszulösen, wenn nach einer Betätigung des ersten Eingabefelds (4) oder gleichzeitig damit das mindestens eine zweite Eingabefeld (5) betätigt wird. Es wird weiterhin ein entsprechendes Verfahren beschrieben.

## Beschreibung

Die Erfindung geht aus von einer Türkommunikationsanlage mit einer Wohnungs- oder Türstation, die mindestens ein berührungssensitives Display mit einem darauf angezeigten ersten Eingabefeld für die manuelle Auslösung einer Funktion der Türkommunikationsanlage aufweist. Eine derartige Türkommunikationsanlage ist aus der WO 2011/124441 A1 bekannt.

Türkommunikationsanlagen und insbesondere deren Wohnungs- oder Türstationen lassen sich häufig mit Hilfe eines berührungssensitiven Displays, auch Touch-Screen genannt, bedienen. Durch das Verstimmen eines elektrischen Feldes durch Berührung mit dem Finger oder einem dafür vorgesehenen Stift ermittelt ein Touch-Controller des Displays die Position der Berührung und gibt die Koordinaten an eine weiterverarbeitende Komponente des Geräts weiter, so dass entweder Änderungen auf dem Display angezeigt werden oder eine Funktion der Türkommunikationsanlage ausgelöst werden kann.

Einige der über das berührungssensitive Display auslösbaren Funktionen sind sicherheitsrelevant, wie zum Beispiel bei einer Türkommunikationsanlage der Befehl zum Öffnen einer Gebäudetür. Durch Fehlbedienung, unrechtmäßige Bedienung oder technische Fehlfunktion der Toucherkennung (sogenannte Ghost-Touches) kann es zu einem ungewollten Auslösen der sicherheitsrelevanten Funktion kommen.

Es ist daher die Aufgabe der Erfindung, die eingangs beschriebene Türkommunikationsanlage derart weiterzuentwickeln, dass Fehlbedienungen sicherheitsrelevanter Funktionen der Türkommunikationsanlage zumindest weitestgehend unterbunden werden.

Diese Aufgabe wird durch eine Türkommunikationsanlage mit den Merkmalen des Anspruchs 1 gelöst. Der nebengeordnete Anspruch 9 betrifft ein entsprechendes Verfahren für den Betrieb einer derartigen Türkommunikationsanlage. Vorteilhafte Ausführungsformen sind jeweils Gegenstand der abhängigen Ansprüche.

Demgemäß ist bei der Türkommunikationsanlage vorgesehen, dass die Wohnungs- oder Türstation mindestens ein zweites Eingabefeld aufweist und dazu eingerichtet ist, die Funktion, die insbesondere eine sicherheitsrelevante Funktion sein kann, erst dann auszulösen, wenn nach einer Betätigung des ersten Eingabefelds oder gleichzeitig damit das mindestens eine zweite Eingabefeld betätigt wird.

Es wird somit eine mehrstufige Freigabe einer Funktion der Türkommunikationsanlage beschrieben, die insbesondere eine sicherheitsrelevante Funktion sein kann. Ein mit der Wohnungs- oder Türstation interagierender Benutzer kann beispielsweise die Funktion "Türöffner" nicht durch eine einzige Betätigung des berührungssensitiven Displays auslösen, sondern wird nach einer ersten Betätigung des ersten Betätigungsfelds zu mindestens einer zweiten Betätigung des zweiten Bedienfeldes aufgefordert. Dies kann auf unterschiedliche Art und Weise erfolgen, beispielsweise durch Einblenden eines weiteren Betätigungsfeldes an einer beliebigen Stelle auf dem Display, durch Auffordern zur Eingabe einer Ziffern-Zeichen-Sequenz oder eines Musters, oder auf noch eine andere Art und Weise, die sicherstellt, dass ein versehentliches Auslösen der Funktion der Türkommunikationsanlage ausgeschlossen ist oder zumindest weitestgehend unterbunden wird. Die Erkennbarkeit der erforderlichen Handlung für die Betätigung des zweiten Eingabefeldes kann dabei so gestaltet sein, dass beispielsweise Kinder nicht ohne weiteres die Lösung erraten können und damit beispielsweise der versehentliche Einlass unerwünschter Personen unterbunden wird.

Die vorgeschlagene Türkommunikationsanlage verhindert weiterhin, dass bei berührungssensitiven Displays technisch durchaus übliche Fehlfunktionen, wie die sogenannten "Ghost-Touches" des Displays, nicht zu einem automatischen und unerwünschten Auslösen der sicherheitsrelevanten Funktion der Türkommunikationsanlage führen. "Ghost-Touches" werden durch den Störpegel der das berührungssensitive Display umgebenden elektrischen Felder ausgelöst, die teilweise höher sind, als die Signalpegel beim Auflegen eines Fingers oderdes für die Betätigung vorgesehenen Stiftes. Deshalb kommunizieren berührungssensitive Displays bei dem aus dem Stand der Technik bekannten Anlagen von Zeit zu Zeit Betätigungen an nachfolgende Verarbeitungseinheiten, obwohl keine manuelle Eingabe über das berührungssensitive Display erfolgt ist.

Um die Beeinflussung der Türkommunikationsanlage durch die beschriebenen "Ghost-Touches" weiter zu verringern, kann daher vorgesehen sein, dass das zweite Betätigungsfeld nach erfolgtem Betätigen oder gleichzeitig mit dem Betätigen des ersten Betätigungsfeldes an einer beliebigen und beispielsweise zufällig ausgewählten Position auf dem Display angezeigt wird. Bei dieser Ausführungsform ist es gerade äußert unwahrscheinlich, dass bei einer Abfolge von zwei "Ghost-Touches" der zweite "Ghost-Touch" genau an der beliebig ausgewählten Position des zweiten Eingabefeldes auf dem Display erfolgt und damit die über das erste Eingabefeld über einen ersten "Ghost-Touch" erfolgte Eingabe bestätigt.

Eine weitere Erhöhung der Eingabesicherheit kann dadurch erreicht werden, dass anstelle eines zweistufigen Bedienkonzeptes ein drei- oder mehr stufiges Bedienkonzept angewendet wird, bei dem nach der Betätigung eines ersten Eingabefeldes mindestens noch ein zweites und ein drittes Eingabefeld betätigt werden müssen, um die Funktion der Türkommunikationsanlage auszulösen.

Eine weitere Möglichkeit zur Verbesserung der Eingabesicherheit besteht darin, dass die Wohnungs- oder Türstation zwei unterschiedliche Technologien zur Berührungserkennung des ersten und des zweiten Eingabefeldes einsetzt. Beispielsweise kann das erste Eingabefeld auf dem berührungssensitiven Display angezeigt werden, während das zweite Eingabefeld ein elektromechanischer Schalter, Taster, Tastsensor oder dergleichen ist.

Es kann daher vorgesehen sein, dass das mindestens eine zweite Eingabefeld ein zweites auf dem berührungssensitiven Display angezeigtes Eingabefeld oder ein Schalter, ein Taster, ein Tastsensor oder ein anderweitiges elektromechanisch ausgebildetes Eingabeelement ist. Das elektromechanische Eingabeelement kann insbesondere außerhalb des berührungssensitiven Displays angeordnet sein.

Wenn die über die Wohnungs- oder Türstation ausgelöste Funktion eine sicherheitsrelevante Funktion ist, kann diese beispielsweise die Freigabe einer elektromechanisch angesteuerten Türschlossfalle sein.

Das erste Eingabefeld und das mindestens zweite Eingabefeld können dasselbe Eingabefeld sein, wobei die Türkommunikationsanlage dazu eingerichtet ist, nach mehrmaligem Betätigen des Eingabefelds unter Einhaltung eines zeitlichen Abstandes zwischen aufeinanderfolgenden Betätigungen die Funktion auszulösen.

Das berührungssensitive Display kann weiterhin dazu eingerichtet sein, das zweite Eingabefeld erst dann anzuzeigen, wenn das zweite Eingabefeld betätigt ist oder betätigt wurde. Dabei kann vorgesehen sein, dass die Wohnungs- oder Türstation dazu eingerichtet ist, infolge der Betätigung des ersten Eingabefeldes das zweite Eingabefeld an einer Position auf dem Display anzuzeigen, die aus einer Mehrzahl möglicher Positionen auf dem Display zufällig oder quasi-zufällig ausgewählt ist. Die zufällige oder quasi-zufällige Auswahl kann mit Hilfe eines Zufallsgenerators erreicht werden, wobei die Anzahl der möglichen Positionen des zweiten Eingabefelds auf dem Display im Wesentlichen ausschließlich durch die Gestaltung des Eingabefeldes und die Auflösung des Displays limitiert sein kann. Anstelle eines Zufallsgenerators kann auch eine Liste mit einer vorgegebenen Reihenfolge aus quasi-zufällig ausgewählten Positionen in der Türkommunikationsanlage hinterlegt sein, die nacheinander und gegebenenfalls iterativ abgearbeitet wird.

Auf dem berührungssensitiven Display kann ein drittes Eingabefeld für die manuelle Auslösung einer sicherheitsirrelevanten Funktion der Türkommunikationsanlage angeordnet sein. Dabei kann die Türkommunikationsanlage dazu eingerichtet sein, die sicherheitsirrelevante Funktion ausschließlich infolge einer einfachen Betätigung des dritten Eingabefeldes auszulösen. Die sicherheitsirrelevante Funktion kann beispielsweise die Ansteuerung einer Beleuchtung des Displays oder des Gebäudes sein.

Gemäß einem anderen Aspekt wird ein Verfahren für den Betrieb einer Türkommunikationsanlage beschrieben, dass die Schritte aufweist:
- Anzeigen eines ersten Eingabefeldes für die manuelle Auslösung einer Funktion der Türkommunikationsanlage auf einem berührungssensitiven Display einer Wohnungs- oder Türstation der Türkommunikationsanlage;
- Auswählen der Funktion durch manuelles Betätigen des ersten Eingabefeldes;
- manuelles Betätigen mindestens eines zweiten Eingabefeldes der Wohnungs- oder Türstation gleichzeitig zu dem Auswählen oder anschließend an das Auswählen; und
- Auslösen der ausgewählten Funktion anschließend an das manuelle Betätigen des mindestens einen zweiten Eingabefeldes.

Das manuelle Betätigen mindestens eines zweiten Eingabefeldes kann das manuelle Betätigen eines Schalters, eines Tasters, oder eines Tastsensors außerhalb des berührungssensitiven Displays aufweisen.

Ebenso kann das manuelle Betätigen mindestens eines zweiten Eingabefeldes das Anzeigen des mindestens einen zweiten Eingabefeldes erst nach dem Betätigen des ersten Eingabefeldes aufweisen.

Bei dem Verfahren kann vorgesehen sein, dass erst infolge des Betätigens des ersten Eingabefeldes das zweite Eingabefeld an einer Position auf dem Display angezeigt wird, die aus einer Mehrzahl möglicher Positionen auf dem Display zufällig oder quasi-zufällig ausgewählt wird.

Ebenso kann das Verfahren aufweisen, dass auf dem berührungssensitiven Display ein drittes Eingabefeld für die manuelle Auslösung einer sicherheitsirrelevanten Funktion der Türkommunikationsanlage angezeigt wird, wobei vorgesehen sein kann, dass die sicherheitsirrelevante Funktion ausschließlich infolge einer einfachen Betätigung des dritten Eingabefeldes ausgelöst wird.

Das Auslösen der ausgewählten Funktion kann das Auslösen einer sicherheitsrelevanten Funktion aufweisen, beispielsweise das Freigeben einer elektromechanisch angesteuerten Türschlossfalle.

Nach dem Auswählen der Funktion durch manuelles Betätigen des Eingabefeldes kann eine Text- oder Bildausgabe auf dem Display angezeigt werden. Dabei kann das manuelle Betätigen mindestens eines zweiten Eingabefeldes das Eingeben einer der Text- oder Bildausgabe entsprechenden Zahlen- und/oder Ziffernkombination oder eines der Text- oder Bildausgabe entsprechenden Musters aufweisen.

Weitere Einzelheiten der Erfindung werden anhand der nachstehenden Figur erläutert.

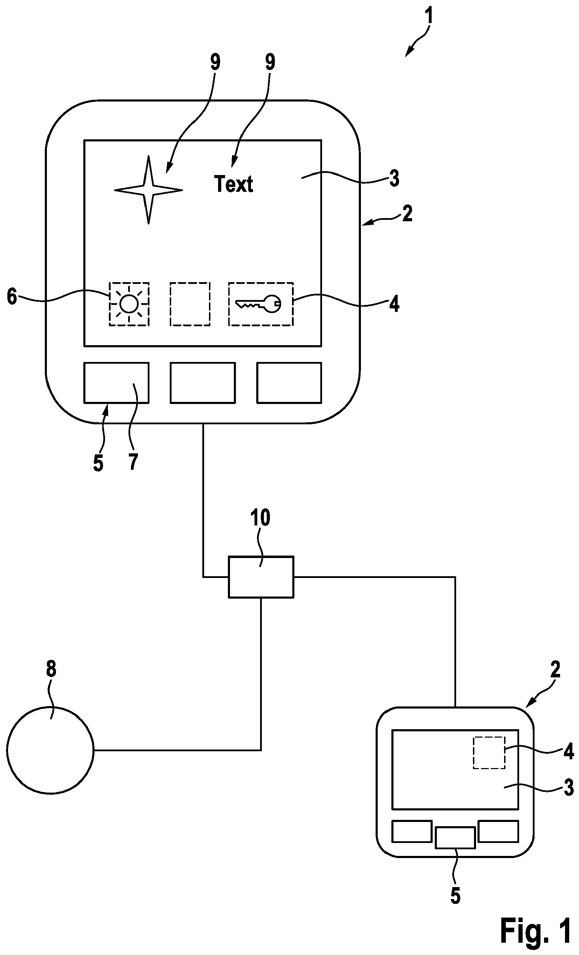

Die Figur 1 zeigt eine Türkommunikationsanlage 1, die im Wesentlichen aus zwei Wohnungs- oder Türstationen 2 besteht, die über einen Anlagenserver 10 mit funktionalen Baugruppen der Türkommunikationsanlage verbunden sind, vorliegend beispielhaft mit einer Türschlossfalle 8. Wie bei den aus dem Stand der Technik bekannten Türkommunikationsanlagen kann auch die vorliegende Türkommunikationsanlage 1 für den Aufbau einer audiovisuellen Kommunikationsverbindung zwischen einer Wohnungsstation und einer Türstation der Türkommunikationsanlage 1 ausgebildet sein. Dazu können die Wohnungs- oder Türstationen 2 entsprechend eine Kamera, ein Mikrophon und einen Lautsprecher aufweisen. Diese Gegenstände betreffen jedoch nicht die vorliegende Erfindung und werden daher nicht weiter beschrieben.

Erfindungsgemäß weist mindestens eine der Wohnungs- oder Türstationen 2, insbesondere eine Wohnungsstation dieser, mindestens ein berührungssensitives Display 3 auf, auf dem ein erstes Eingabefeld 4 für die manuelle Auslösung einer Funktion der Türkommunikationsanlage 1 angezeigt wird. Das Eingabefeld 4 der oben links in der Darstellung gemäß Figur 1 gezeigten Station 2 dient zur Betätigung der Türschlossfalle 8 und weist zur Kennzeichnung ein eingeblendetes Schlüsselsymbol auf.

Für die Betätigung der Türschlossfalle 8 ist es nunmehr erforderlich, dass nach einem ersten Betätigen des ersten Eingabefeldes 4 mit dem eingeblendeten Schlüsselsymbol mindestens ein zweites Eingabefeld 5 einmalig betätigt wird, welches vorliegend außerhalb des Displays 3 angeordnet ist und beispielsweise als ein elektromechanischer Schalter, Taster oder Tastsensor 7 ausgebildet sein kann. Die Wohnungs- oder Türstation 2 ist dazu eingerichtet, die Funktion der Türkommunikationsanlage 1, vorliegend die Betätigung der Türschlossfalle 8, erst dann auszulösen, wenn nach einer ersten Betätigung des ersten Eingabefeldes 4 oder gleichzeitig damit das mindestens zweite Eingabefeld 5, vorliegend ein elektromechanischer Tastsensor 7 dieses, betätigt wird. Erst infolge der Bestätigung der Eingabe über das erste Eingabefeld 4 durch Betätigung des zweiten Eingabefeldes 5 wird von dem Anlagenserver 10 ein Signal zur Ansteuerung der Türschlossfalle 8 ausgelöst, was im vorliegenden Fall die Beaufschlagung der Türschlossfalle 8 mit einer elektrischen Spannung aufweisen kann, so dass ein Riegel der Türschlossfalle 8 elektromagnetisch aus einer Verriegelungsposition, in welche er vorgespannt sein kann, in eine Freigabeposition bewegt wird.

Für die Auslösung der Türschlossfalle 8 kann daher vorgesehen sein, dass in einem ersten Schritt das erste Eingabefeld 4 auf dem Display 3 der Wohnungs- oder Türstation 2 angezeigt wird, so dass dieses von einem Benutzer betätigt und dadurch eine hinter dem ersten Eingabefeld 4 hinterlegte Funktion ausgewählt werden kann. Um die Funktionen freizugeben, ist erfindungsgemäß vorgesehen, dass mindestens ein zweites Eingabefeld 5 der Wohnungs- und Türstation gleichzeitig zu dem Auswählen der Funktion durch Betätigung des ersten Eingabefeldes 4 oder anschließend daran durchgeführt wird. Erst nachdem beide Eingabefelder 4, 5 betätigt worden sind, wird die ausgewählte Funktion ausgelöst.

Alternativ kann das Auswählen der Funktion durch manuelles Betätigen des Eingabefeldes das Anzeigen einer Text- oder Bildausgabe 9 auf dem Display 3 aufweisen, woraufhin von einem Benutzer eine der Text- oder Bildausgabe 9 entsprechende Zahlen- und/oder Zifferkombination oder ein der Text- oder Bildausgabe 9 entsprechendes Muster über das zweite Eingabefeld 5 eingegeben wird. Dazu kann das Eingabefeld einen Zahlenblock, einen Nummernblock, oder dergleichen aufweisen, je nachdem was für die Reproduktion des angezeigten Textes oder Bildes auf dem Display 3 erforderlich ist.

Die in der vorstehenden Beschreibung, in den Zeichnungen sowie in denAnsprüchen offenbarten Merkmale der Erfindung können sowohl einzeln als auch in beliebiger Kombination für die Verwirklichung der Erfindung wesentlich sein.

### Bezugszeichenliste:

- 1: Türkommunikationsanlage
- 2: Wohnungs- oder Türstation
- 3: berührungssensitives Display
- 4: erstes Eingabefeld
- 5: zweites Eingabefeld
- 6: drittes Eingabefeld
- 7: Tastsensor
- 8: Türschlossfalle
- 9: Text- oder Bildausgabe
- 10: Anlagenserver

## Patentansprüche

1. Türkommunikationsanlage (1) mit einer Wohnungs- oder Türstation (2), die mindestens ein berührungssensitives Display (3) mit einem darauf angezeigten ersten Eingabefeld (4) für die manuelle Auslösung einer Funktion der Türkommunikationsanlage (1) aufweist, **dadurch gekennzeichnet, dass** die Wohnungs- oder Türstation (2) mindestens ein zweites Eingabefeld (5) aufweist und dazu eingerichtet ist, die Funktion erst dann auszulösen, wenn nach einer Betätigung des ersten Eingabefelds (4) oder gleichzeitig damit das mindestens eine zweite Eingabefeld (5) betätigt wird.

2. Türkommunikationsanlage (1) nach Anspruch 1, bei der das mindestens eine zweite Eingabefeld (5) ein zweites auf dem berührungssensitiven Display (3) angezeigtes Eingabefeld ist.

3. Türkommunikationsanlage (1) nach Anspruch 1, bei der das mindestens eine zweite Eingabefeld (5) einen Schalter, einen Taster, oder einen Tastsensor (7) außerhalb des berührungssensitiven Displays (3) aufweist.

4. Türkommunikationsanlage (1) nach einem der vorangegangenen Ansprüche, bei der die Funktion eine sicherheitsrelevante Funktion ist, vorzugsweise die Freigabe einer elektromechanisch angesteuerten Türschlossfalle (8).

5. Türkommunikationsanlage (1) nach Anspruch 1, bei der das erste Eingabefeld (4) und das mindestens eine zweite Eingabefeld (5) dasselbe Eingabefeld sind, wobei die Türkommunikationsanlage (1) dazu eingerichtet ist, nach mehrmaligem Betätigen des Eingabefelds (4, 5) unter Einhaltung eines zeitlichen Abstands zwischen aufeinander folgenden Betätigungen die Funktion auszulösen.

6. Türkommunikationsanlage (1) nach Anspruch 2, bei der das berührungssensitive Display (3) dazu eingerichtet ist, das zweite Eingabefeld (5) erst dann anzuzeigen, wenn das zweite Eingabefeld (5) betätigt ist oder betätigt wurde.

7. Türkommunikationsanlage (1) nach Anspruch 6, bei der die Wohnungs- oder Türstation (2) dazu eingerichtet ist, infolge der Betätigung des ersten Eingabefelds (4) das zweite Eingabefeld (5) an einer Position auf dem Display (3) anzuzeigen, die aus einer Mehrzahl möglicher Positionen auf dem Display (3) zufällig oder quasi-zufällig ausgewählt ist.

8. Türkommunikationsanlage (1) nach einem der vorangegangenen Ansprüche, bei der auf dem berührungssensitiven Display (3) eine drittes Eingabefeld (6) für die manuelle Auslösung einer sicherheitsirrelevanten Funktion der Türkommunikationsanlage (1) angeordnet ist, wobei die Türkommunikationsanlage (1) dazu eingerichtet ist, die sicherheitsirrelevante Funktion ausschließlich infolge einer einfachen Betätigung des dritten Eingabefelds (6) auszulösen.

9. Verfahren für den Betrieb einer Türkommunikationslage, wobei das Verfahren die Schritte aufweist:
- Anzeigen eines ersten Eingabefelds (4) für die manuelle Auslösung einer Funktion der Türkommunikationsanlage (1) auf einem berührungssensitiven Display (3) einer Wohnungs- oder Türstation (2) der Türkommunikationsanlage (1);
- Auswählen der Funktion durch manuelles Betätigen des ersten Eingabefelds (4);
- manuelles Betätigen mindestens eines zweiten Eingabefelds (5) der Wohnungs- oder Türstation (2) gleichzeitig zu dem Auswählen oder anschließend an das Auswählen; und
- Auslösen der ausgewählten Funktion anschließend an das manuelle Betätigen des mindestens einen zweiten Eingabefelds.

10. Verfahren nach Anspruch 9, bei dem das manuelle Betätigen mindestens eines zweiten Eingabefelds (5) das manuelle Betätigen eines Schalters, eines Tasters, oder eines Tastsensors (7) außerhalb des berührungssensitiven Displays (3) aufweist.

11. Verfahren nach Anspruch 9 oder 10, bei dem das manuelle Betätigen mindestens eines zweiten Eingabefelds (5) das Anzeigen des mindestens einen zweiten Eingabefelds (5) erst nach dem Betätigen des ersten Eingabefelds (4) aufweist.

12. Verfahren nach einem der Ansprüche 9 bis 11, bei dem erst infolge des Betätigens des ersten Eingabefelds (4) das zweite Eingabefeld (5) an einer Position auf dem Display (3) angezeigt wird, die aus einer Mehrzahl möglicher Positionen auf dem Display (3) zufällig oder quasi-zufällig ausgewählt wird.

13. Verfahren nach einem der Ansprüche 9 bis 12, bei dem auf dem berührungssensitiven Display (3) ein drittes Eingabefeld (6) für die manuelle Auslösung einer sicherheitsirrelevanten Funktion der Türkommunikationsanlage (1) angezeigt wird, wobei die sicherheitsirrelevante Funktion ausschließlich infolge einer einfachen Betätigung des dritten Eingabefelds (6) ausgelöst wird.

14. Verfahren nach einem der Ansprüche 9 bis 13, bei dem das Auslösen der ausgewählten Funktion das Auslösen einer sicherheitsrelevanten Funktion aufweist, vorzugsweise das Freigeben einer elektromechanisch angesteuerten Türschlossfalle (8).

15. Verfahren nach einem der Ansprüche 9 bis 14, bei dem nach dem Auswählen der Funktion durch manuelles Betätigen des Eingabefelds eine Text- oder Bildausgabe (9) auf dem Display (3) angezeigt wird, wobei das manuelle Betätigen mindestens eines zweiten Eingabefelds (5) das Eingeben einer der Text- oder Bildausgabe entsprechenden Zahlen- und/oder Ziffernkombination oder eines der Text- oder Bildausgabe (9) entsprechenden Musters aufweist.
